# EUROPEAN PATENT SPECIFICATION

(11) **EP 4 074 173 B1**
(45) Date of publication and mention of the grant of the patent: **04.10.2023**
(21) Application number: 21213276.5
(22) Date of filing: 08.12.2021
(51) Int. Cl.: A01K 15/02, A63B 39/00, A63B 43/06

(54) **ILLUMINABLE BALL**
BELEUCHTBARE BALL
BALLE ILLUMINABLE

(30) Priority: 13.04.2021 GB 202104491
(43) Date of publication of application: 19.10.2022
(73) Proprietor: Cleghorn, Mark, Goxhill Barrow upon Humber Lincolnshire DN19 7LB (GB)
(72) Inventor: Cleghorn, Mark, Goxhill Barrow upon Humber Lincolnshire DN19 7LB (GB)
(74) Representative: Dallimore, Geoffrey Robert

(56) References cited:
- US-A- 6 117 030
- US-A1- 2017 188 546
- Anonymous: "Lightening LED Pet Ball - Pet Safe Dog Ball (Canceled) by Mark Cleghorn - Kickstarter", , 19 September 2021 (2021-09-19), pages 1-7, XP055916909, Retrieved from the Internet: URL:https://www.kickstarter.com/projects/w afflesthedachshund/lightening-led-pet-ball -pet-safe-dog-ball/description [retrieved on 2022-05-02] & Anonymous: "Lightening LED Pet Ball - Pet Safe Dog Ball (Canceled) by Mark Cleghorn - Kickstarter", , 19 September 2021 (2021-09-19), XP055917327, Retrieved from the Internet: URL:https://www.kickstarter.com/projects/w afflesthedachshund/lightening-led-pet-ball -pet-safe-dog-ball/description [retrieved on 2022-05-03]

## Description

### BACKGROUND OF THE INVENTION

This invention relates to an illuminable ball, particularly, although not exclusively, to a ball that is intended for the pet market, especially for dogs. It is well known that dogs enjoy chasing and fetching balls and by arranging a ball to be illuminated, the likelihood of it being lost, especially at night, is reduced.

Known illuminated balls tend to be of three main types:
1. A phosphorescent ball, but these have the disadvantage that they tend to quickly fade and light from them cannot be guaranteed.
2. Balls where power source batteries are sealed into the ball and cannot be changed, which represents a significant waste when the batteries die, and
3. A structure in which the ball is in two semi-spherical halves and screwed together by mating screw threads on each half, but this has the disadvantage that the parts tend to become unscrewed, resulting in the batteries and electrical components providing energy to light emitting diodes (LEDs) becoming exposed and becoming and rendering a severe danger to animals or that are liable to chew and swallow them.

The present invention seeks to provide an exercise ball for pets which is illuminable and in which the foregoing problems are substantially mitigated.

US2017/0188546 describes a light-up object including a rubberized outer body, a plug in a cavity of the outer body, and a lighting device located in the plug. The plug is configured to provide an airtight or watertight bottle for protecting the lighting device and is insertable or removable from the outer body by screwing.

### SUMMARY OF THE INVENTION

According to this invention there is provided an illuminable ball according to claim 1 comprising a low reverse torque closure assembly..

A low reverse torque (or child-resistant) closure assembly generally comprises a closure requiring the simultaneous application of a linear force along an axis together with a rotation about said axis in a removal direction to remove the cover from the hollow casing. For example, the linear force is a downward force (directed towards the ball) and the removal direction is the counter-clockwise direction.

In the invention according to claim 1, the low reverse torque closure assembly includes an inner latch formed by an internally screw threaded cylindrical first member which is concentrically retained to be captive within an outer latch formed by a cylindrical second member having a base upon which are formed first ratchet teeth abutting with ramp means on a facing wall of the first member when the inner latch is turned in a first direction to rotate the inner latch into the outer latch, causing the internal screw threads on the cylindrical first member to cooperate with mating threads on the cover means to securely close said hollow casing.

The first ratchet teeth sliding up and over the ramp means with negligible back ratchet torque when the inner latch is turned in a second direction opposite to said first direction without the application of a downforce by virtue of at least one resilient spring member disposed in the base of the second member so as to form a space between the first and second members until a downward force against the at least one spring member is applied on the inner latch and a torque simultaneously applied on the inner latch causes the first ratchet teeth to engage with second ratchet teeth on the first member and the inner latch is rotated in a second direction to remove said cover means.

Advantageously, said ramp means define a low friction surface during undepressed counter-clockwise rotation of the cover means and a contact area during clockwise rotation of the cover means.

Conveniently, the second ratchet teeth define a contact area for removal of the cover means from the hollow casing when the cover means is depressed.

Preferably, a slot is provided in an outer surface of said cover means for insertion of a removal implement arranged to provide said downward force and a twisting torque.

Conveniently, said cover means comprises a cap in which said slot is located and said cap is matingly secured to a housing within which is mounted said control means, said housing having an external screw thread arranged to mate with the internal screw thread of the cylindrical first member.

Advantageously, said control means includes an inertial switch which is normally closed, but which is arranged to open upon activation by a predetermined G-force to permit a power source to energise said at least one LED.

Preferably, said power source is at least one battery cell which is accessed by rotating the cover means in said second direction and applying a downward force to lock the inner and outer latches together so that a combination of cap and housing may be unscrewed from the inner latch, whereas without the application of a downward force, the inner latch rotatably slides over the outer latch.

### BRIEF DESCRIPTION OF THE DRAWINGS

The invention will now be described, by way of example, with reference to the accompanying drawings, in which:
Figure 1 shows an exploded perspective view of an illuminable ball in accordance with this invention,
Figure 2(a) shows a top view of the illuminable ball of Figure 1,
Figure 2(b) shows a cross-sectional view along double arrow-headed lines A-A of Figure 2(a), showing the assembled parts of the illuminable ball in situ,
Figure 3(a) shows the illuminable ball casing with the cover removed,
Figure 3(b) shows a cross-section along double arrow-headed lines B-B of Figure 3(a),
Figure 4(a) shows a top view of an outer latch used in the illuminable ball,
Figure 4(b) shows a cross-section along double arrow-headed lines I-I of Figure 4(a),
Figure 4(c) shows a cross-sectional view along double arrow-headed lines J-J of Figure 4(a),
Figure 5(a) shows a top view of an inner latch that is retained within the outer latch,
Figure 5(b) shows a cross-section along double arrow-headed lines G-G of Figure 5(a),
Figure 5(c) shows a cross-sectional view along double arrow-headed lines of Figure 5(a),
Figure 6(a) shows a top view of a housing for power source and control circuitry for the LEDs,
Figure 6(b) shows a cross-section along double arrow-headed lines E-E of Figure 6(a),
Figure 6(c) shows a cross-sectional view along double arrow-headed lines F-F of Figure 6(a),

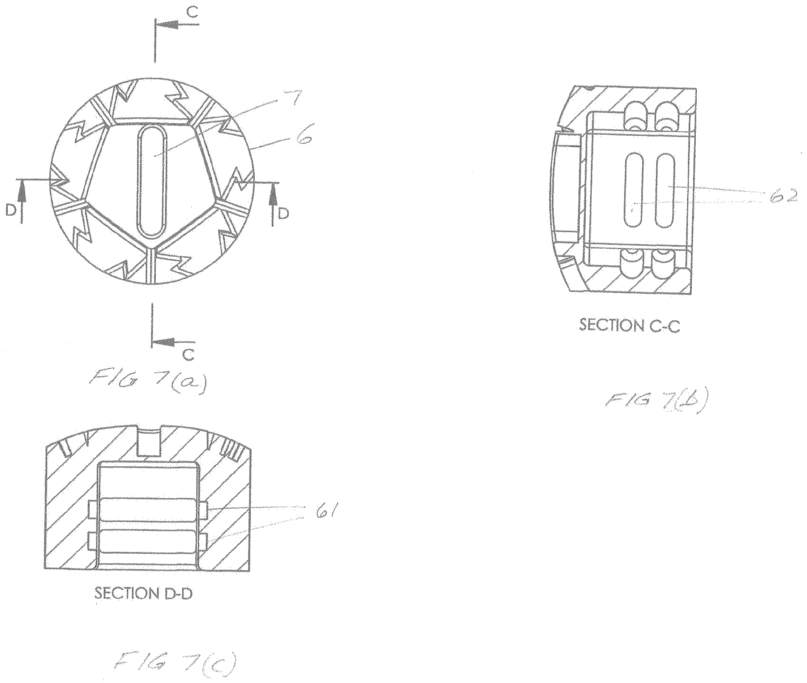

Figure 7(a) shows a top view of a cover that is secured to the housing,
Figure 7(b) shows a cross-section along double arrow-headed lines C-C of Figure 7(a),
Figure 7(c) shows a cross-section along double arrow-headed lines D-D of Figure 7(a), and
Figure 8 shows a circuit diagram of the electrical components used in the illuminable ball of this invention.

In the Figures like reference numerals denote like parts.

### DETAILED DESCRIPTION OF THE INVENTION

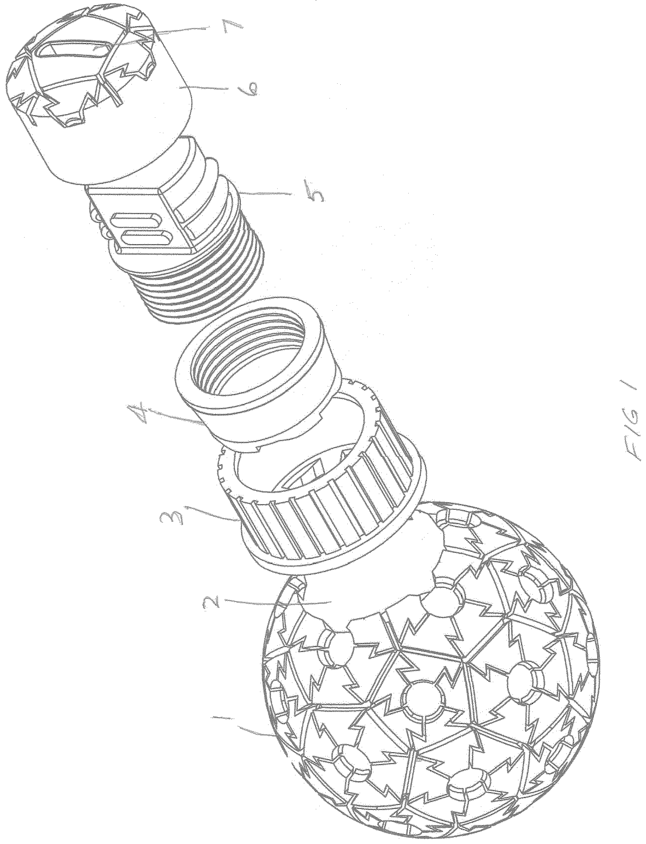

Referring to Figure 1, the illuminable ball has a translucent spherical hollow housing 1 made from, for example, silicone or thermoplastic rubber (TPR) having a textured and patterned outer surface. The housing has an opening through and in which is located the series connection of an outer latch 3, an inner latch 4 which is retained within the outer latch 3, a housing 5 and a cap 6. The inner latch 3 has an internal screw thread which mates with an external screw thread on the housing 5 which is arranged to mount a power source and electrical circuitry for illuminating at least one LED. The cap 6 is arranged to be a push fit and is secured over an end of the housing remote from the external screw thread. The cap has a partially diametrically extending slot 7 for insertion of a removal implement such as a screwdriver, or coin, to screw the combination of cap and housing into and out of the inner latch 4.

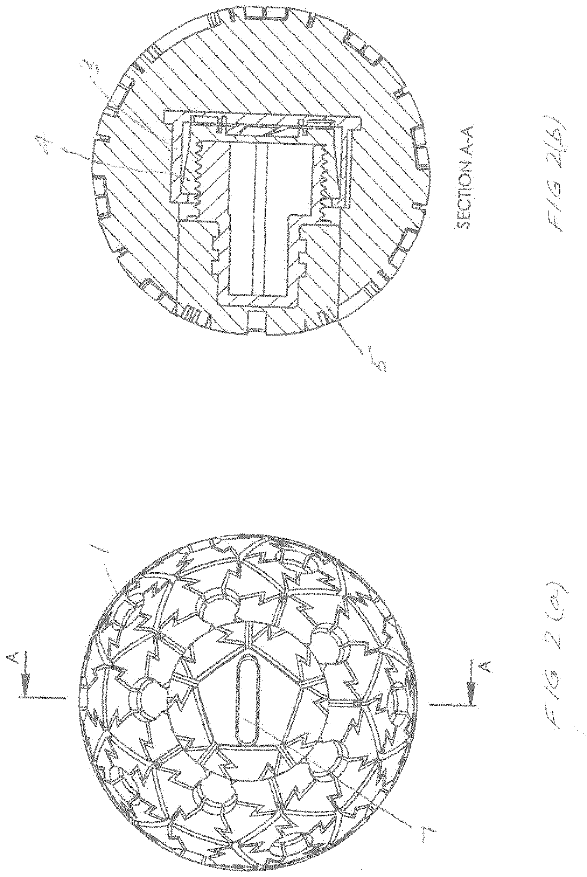

Figure 2(a) shows a top view of the illuminable ball and Figure 2(b) show a cross-sectional view of the assembled components.

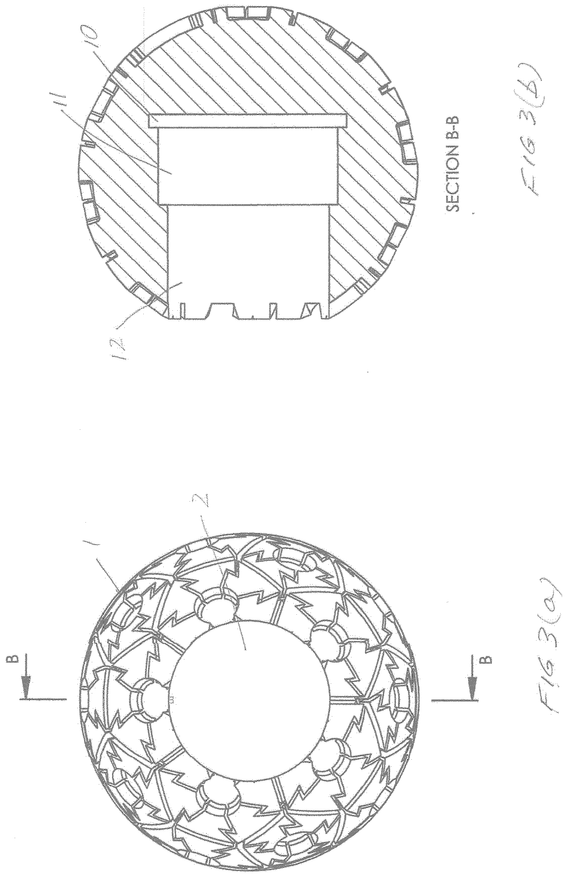

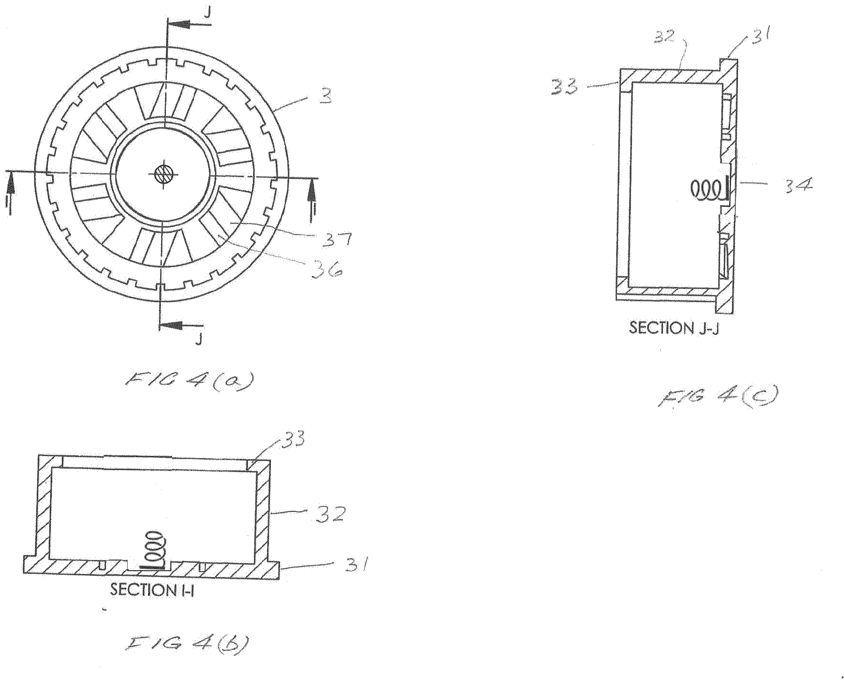

Figures 3(a) and 3(b) show the hollow casing of the illuminable ball having three concentric cavities 10, 11, 12. The diametrically larger cavity 10 provides a flat base to captively hold a flat skirt 31 (shown in Figures 4(b) and 4(c)) of the outer latch 3. The intermediate cavity 11 locates tubular housing 32 to which the skirt is attached and a top, open, end of the housing 32 having a lip 33 for captively securing the inner latch 4. The upper cavity 12 engages with and supports the combination of cap 4 and housing 3.

Child resistant closures formed by two nested members or latches are known in the art. Typically, inner and outer latches are provided with cooperating sets of ratchet teeth which engage each other when the inner latch is rotated in a direction to close an opening (usually the clockwise direction). When the inner latch is rotated in a removal direction (usually counter-clockwise), the ratchet teeth cam or ratchet past each other on inclined surfaces so that the latches cannot be removed by mere counter-clockwise rotation. The teeth of the latches are normally kept apart by a resilient springs 34, one single spring central to the section being shown in the exemplary embodiment, the spring being affixed to an internal cavity section surface of the skirt 31.

Formed on the cavity space internal surface of the skirt 31, and circumferentially surrounding the spring 34, are a plurality of ratchet teeth 36 separated by a plurality of ramps 37.

The outer surface of the tubular housing 32 is castellated for increased securement into mating castellations in the intermediate cavity 11.

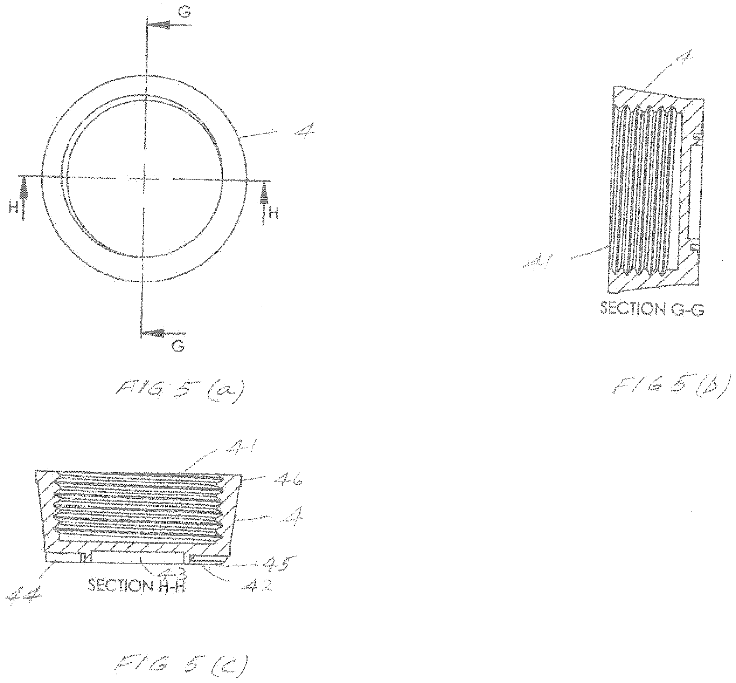

The inner latch, particularly shown in Figures 5(a) to 5(c), is frusto-conically shaped and has an internal screw thread 41 arranged to mate with a corresponding external screw thread 51 on housing 5. A base 42 of latch 4 has a circumferential rebate 43 against the base of which act leaf springs 34. Formed in the base 42 are ramps 44 for abutting with the teeth 36 when the inner latch is turned in a first direction to rotate the inner latch in the outer latch so that the external screw thread 51 may engage with internal screw threads 41 to secure the housing into the inner latch. The base 42 also has ratchet teeth 45 to engage with the ratchet teeth 36 when downward pressure is applied on the inner latch to compress the leaf springs 34 so that the ratchet teeth engage and when the inner latch is rotated in a second, counter-clockwise, direction, so the combination of cap and housing may be unscrewed from the inner latch 4.

An upper external periphery of the inner latch 4 has a lip 46 which is arranged to engage under lip 33 when the inner latch is forced into the cavity of outer latch 3.

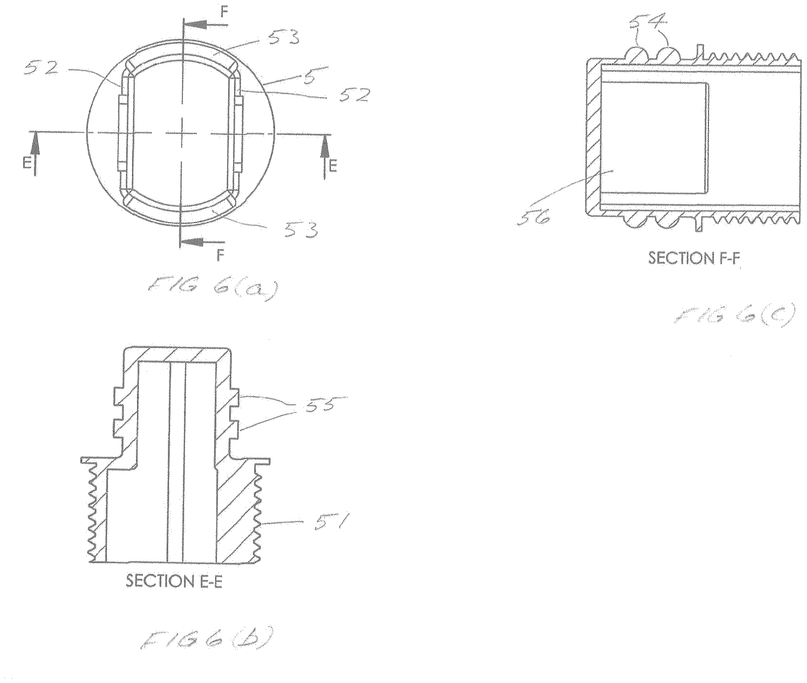

The housing for the LEDs and electrical control apparatus will now be described with reference to Figures 6(a) and 6(b).

The housing 5 has a lower portion thereof formed by external screw threads 51 and the upper portion is formed by parallel sides 52 joined by opposing arcuate sides 53. The arcuate sides 53 are provided with a pair of external protrusions 54 and the sides 52 are provided with a pair of protrusions 55. The housing has an internal chamber 56 having a base upon which a printed circuit board (not shown) is mounted for the at least one light emitting diode (LED) and electrical circuitry associated therewith to be described hereinafter.

The cap 6 has internal indentations 61, 62 for mating with the protrusions 54, 55 respectively. The cap is a force-fit over the housing 5, but may also be secured thereto by adhesive.

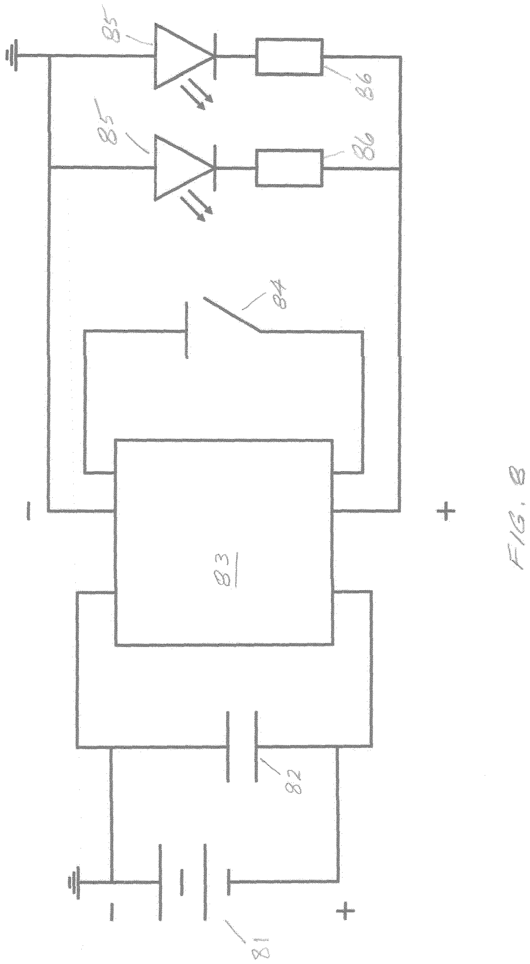

The electrical circuitry for the illuminable ball will now be described with reference to Figure 8.

A power source 81 formed, for example, by a pair of serially connected 3-Volt battery cells, such as CR2032 cells, is smoothed by a capacitor 82 and applied to an integrated circuit 83. The integrated circuit is triggered by an inertia switch 84 which is normally closed, but opens upon a predetermined G-force so that the integrated circuit 83 applies energy to a pair of parallel coupled LEDs 85, each having a load resistor 86. It is to be understood that fewer or more LEDs may be employed, as desired. The inertia switch 84 may be arranged to be open-circuited when the ball is thrown or when it strikes the ground and the integrated circuit 83 may be arranged to provide pulsating current to the LEDs to provide a flashing light or a constant light for a predetermined period of time before the inertia switch 84 closes.

The cap, housing, inner and outer latches may be formed of plastics material.

Embodiments of the present invention thus provide an illuminable ball with the power source and associated electrical circuitry secured by a low reverse torque closure assembly of a kind sometimes referred to as a two-piece child-resistant closure, whereby the combination of cap, housing and inner latch is freely rotatable until downward pressure is applied and an anticlockwise turning motion is applied to unscrew the housing from the latch so as to obtain access to replace the battery cells of the power source or other electrical components.

In summary, embodiments of the invention provide an illuminable ball that has a translucent spherical hollow casing 1 in which is housed at least one light emitting diode (LED) 85, and electrical control circuitry 81 - 84 therefor which is arranged to activate the LED upon a predetermined G-force being exceeded. The casing has a cover 5, 6 which is attached to the casing by a low reverse torque closure assembly comprising inner and outer latches 4, 3, whereby the inner latch may be rotated in a removeable direction when insufficient force is applied to the inner latch so that it is prevented from engaging with the outer latch whereby undesired or accidental removal of the housing screwed into the inner latch is prevented.

## Claims

1. An illuminable ball including a translucent spherical hollow casing (1) in which is housed illumination means comprising at least one LED (85) and control means arranged to illuminate said at least one LED; and cover means (5, 6) providing access to the illumination means inside said hollow casing; wherein said cover means is attached to said casing by a low reverse torque closure
**characterised in that** the low reverse torque closure includes an inner latch (4) formed by an internally screw threaded (41) cylindrical first member which is concentrically retained to be captive within an outer latch (3) formed by a cylindrical second member having a base upon which are formed first ratchet teeth (36) abutting with ramp means (37) on a facing wall of the first member when the inner latch is turned in a first direction to rotate the inner latch into the outer latch, causing the internal screw threads on the cylindrical first member to cooperate with mating threads on the cover means to securely close said hollow casing; and the first ratchet teeth sliding up and over the ramp means with negligible back ratchet torque when the inner latch is turned in a second direction opposite to said first direction without the application of a downforce by virtue of at least one resilient spring member (34) disposed in the base of the second member so as to form a space between the first and second members until a downward force against the at least one spring member is applied on the inner latch and a torque simultaneously applied on the inner latch causes the first ratchet teeth to engage with second ratchet teeth (45) on the first member and the inner latch is rotated in a second direction to remove said cover means.

2. An illuminable ball as claimed in claim 1, wherein said ramp means define a low friction surface during undepressed counter-clockwise rotation of the cover means and a contact area during clockwise rotation of the cover means.

3. An illuminable ball as claimed in claim 1 or 2, wherein the second ratchet teeth define a contact area for removal of the cover means from the hollow casing when the cover means is depressed.

4. An illuminable ball as claimed in any preceding claim, wherein a slot (7) is provided in an outer surface of said cover means for insertion of a removal implement arranged to provide a downward force and a twisting torque to remove the cover means from the hollow casing.

5. An illuminable ball as claimed in claim 4, wherein said cover means comprises a cap (6) in which said slot is located and said cap is matingly secured to a housing within which is mounted said control means, said housing having an external screw thread arranged to mate with the internal screw thread of the cylindrical first member.

6. An illuminable ball as claimed in any preceding claim, wherein said control means includes an inertial switch (84) which is normally closed, but which is arranged to open upon activation by a predetermined G-force to permit a power source (81) to energise said at least one LED.

7. An illuminable ball as claimed in claim 6 when dependent on claim 5, wherein said power source is at least one battery cell which is accessed by rotating the cover means in said second direction and applying a downward force to lock the inner and outer latches together so that a combination of cap and housing may be unscrewed from the inner latch, whereas without the application of a downward force, the inner latch rotatably slides over the outer latch.

## Patentansprüche

1. Beleuchtbarer Ball, der ein durchscheinendes sphärisches Hohlgehäuse (1) beinhaltet, in dem ein Beleuchtungsmittel beherbergt ist, das Folgendes umfasst: mindestens eine LED (85) und ein Steuerungsmittel, eingerichtet zum Erleuchten der mindestens einen LED; und ein Abdeckmittel (5, 6) zum Bereitstellen von Zugang zu dem Beleuchtungsmittel im Innern des Hohlgehäuses; wobei das Abdeckmittel durch einen Verschluss mit geringem Schließmoment an dem Gehäuse angebracht ist,
**dadurch gekennzeichnet, dass** der Verschluss mit geringem Schließmoment eine Innenverrieglung (4) beinhaltet, die durch ein mit einem Innengewinde (41) versehenes zylindrisches erstes Glied ausgebildet ist, das konzentrisch gehalten wird, um innerhalb einer Außenverrieglung (3) unverlierbar zu sein, die durch ein zylindrisches zweites Glied ausgebildet wird, das eine Basis aufweist, auf der erste Sperrzähne (36) ausgebildet sind, die an einem Rampenmittel (37) an einer zugewandten Wand des ersten Glieds anliegen, wenn die Innenverrieglung in einer ersten Richtung gedreht wird, um die Innenverrieglung in die Außenverrieglung einzudrehen, was das Innengewinde an dem zylindrischen ersten Glied veranlasst, mit dem Gegengewinde an dem Abdeckmittel zusammenzuwirken, um das Hohlgehäuse sicher zu verschließen; und wobei die ersten Sperrzähne mit vernachlässigbarem Schließmoment auf das und über das Rampenmittel gleiten, wenn die Innenverrieglung in einer zur ersten Richtung entgegengesetzten zweiten Richtung ohne die Ausübung einer nach unten gerichteten Kraft vermittels mindestens eines nachgiebigen Federglieds (34), das in der Basis des zweiten Glieds angeordnet ist, eingedreht wird, um somit einen Raum zwischen dem ersten und dem zweiten Glied auszubilden, bis eine nach unten gerichtete Kraft gegen das mindestens eine Federglied auf die Innenverrieglung ausgeübt wird und gleichzeitig ein auf die Innenverrieglung ausgeübtes Drehmoment die ersten Sperrzähne veranlasst, an zweiten Sperrzähnen (45) an dem ersten Glied einzugreifen, und die Innenverrieglung in einer zweiten Richtung gedreht wird, um das Abdeckmittel zu entfernen.

2. Beleuchtbarer Ball nach Anspruch 1, wobei das Rampenmittel während nicht-runtergedrückter Drehung im Gegenuhrzeigersinn des Abdeckmittels eine Oberfläche mit niedriger Reibung und während Drehung des Abdeckmittels im Uhrzeigersinn eine Kontaktfläche definiert.

3. Beleuchtbarer Ball nach Anspruch 1 oder 2, wobei die zweiten Sperrzähne eine Kontaktfläche zum Entfernen des Abdeckmittels von dem Hohlgehäuse, wenn das Abdeckmittel runtergedrückt ist, definiert.

4. Beleuchtbarer Ball nach einem vorhergehenden Anspruch, wobei ein Schlitz (7) in einer äußeren Oberfläche des Abdeckmittels vorgesehen ist zum Einstecken eines Entfernungswerkzeugs, das dafür eingerichtet ist, eine nach unten gerichtete Kraft und ein Verdrehmoment bereitzustellen, um das Abdeckmittel von dem Hohlgehäuse zu entfernen.

5. Beleuchtbarer Ball nach Anspruch 4, wobei das Abdeckmittel eine Verschlusskappe (6) umfasst, in der sich der Schlitz befindet, und wobei die Verschlusskappe an einem Gehäuse, in dem das Steuerungsmittel montiert ist, schlüssig gesichert ist, wobei das Gehäuse ein Außengewinde aufweist, das eingerichtet ist zum Verheiraten mit dem Innengewinde des zylindrischen ersten Glieds.

6. Beleuchtbarer Ball nach einem vorhergehenden Anspruch, wobei das Steuerungsmittel einen Trägheitsschalter (84) beinhaltet, der normal geschlossen ist, der allerdings dafür eingerichtet ist, bei Aktivierung durch eine vorbestimmte G-Kraft zu öffnen, um einer Energiequelle (81) zu erlauben, die mindestens eine LED zu bestromen.

7. Beleuchtbarer Ball nach Anspruch 6, wenn abhängig von Anspruch 5, wobei die Energiequelle mindestens eine Batteriezelle ist, auf die zugegriffen wird, indem das Abdeckmittel in der zweiten Richtung gedreht wird und eine abwärtsgerichtete Kraft ausgeübt wird, um die Innen- und die Außenverriegelung zusammenzuschließen, sodass eine Kombination von Verschlusskappe und Gehäuse aus der Innenverriegelung ausgeschraubt werden kann, wohingegen die Innenverriegelung ohne Ausübung einer nach unten gerichteten Kraft drehend über die Außenverriegelung gleitet.

## Revendications

1. Balle éclairable incluant une enveloppe creuse sphérique translucide (1) dans laquelle est logé un moyen d'éclairage comprenant au moins une LED (85) et un moyen de commande agencé pour éclairer ladite au moins une LED ; et un moyen de recouvrement (5, 6) assurant un accès au moyen d'éclairage à l'intérieur de ladite enveloppe creuse ; dans laquelle ledit moyen de recouvrement est lié à ladite enveloppe par une fermeture à couple inverse faible ;
**caractérisée en ce que** la fermeture à couple inverse faible inclut un verrouillage interne (4) formé par un premier élément cylindrique à filets de vissage internes (41) qui est retenu de façon concentrique de manière à être captif à l'intérieur d'un verrouillage externe (3) formé par un second élément cylindrique comportant une base sur laquelle sont formées des premières dents d'encliquetage (36) venant en butée avec un moyen de rampe (37) sur une paroi faisant face du premier élément lorsque le verrouillage interne est tourné dans une première direction pour entraîner en rotation le verrouillage interne à l'intérieur du verrouillage externe, ce qui a pour effet que les filets de vissage internes sur le premier élément cylindrique coopèrent avec des filets en correspondance sur le moyen de recouvrement afin de fermer de façon sécurisée ladite enveloppe creuse ; et les premières dents d'encliquetage coulissant vers le haut et au-dessus du moyen de rampe selon un couple de cliquet arrière négligeable lorsque le verrouillage interne est tourné dans une seconde direction opposée à ladite première direction sans l'application d'une force dirigée vers le bas en vertu d'au moins un élément de ressort élastique (34) disposé dans la base du second élément de manière à former un espace entre les premier et second éléments jusqu'à ce qu'une force dirigée vers le bas contre l'au moins un élément de ressort soit appliquée sur le verrouillage interne et qu'un couple simultanément appliqué sur le verrouillage interne ait pour effet que les premières dents d'encliquetage soient engagées avec des secondes dents d'encliquetage (45) sur le premier élément et que le verrouillage interne soit tourné dans une seconde direction pour enlever ledit moyen de recouvrement.

2. Balle éclairable telle que revendiquée selon la revendication 1, dans laquelle ledit moyen de rampe définit une surface à faible friction pendant la rotation dans le sens inverse des aiguilles d'une montre sans compression du moyen de recouvrement et une zone de contact pendant la rotation dans le sens des aiguilles d'une montre du moyen de recouvrement.

3. Balle éclairable telle que revendiquée selon la revendication 1 ou 2, dans laquelle les secondes dents d'encliquetage définissent une zone de contact pour l'enlèvement du moyen de recouvrement hors de l'enveloppe creuse lorsque le moyen de recouvrement est comprimé.

4. Balle éclairable telle que revendiquée selon l'une quelconque des revendications précédentes, dans laquelle une fente (7) est prévue dans une surface externe dudit moyen de recouvrement pour l'insertion d'un outil d'enlèvement agencé pour exercer une force dirigée vers le bas et un couple de torsion pour enlever le moyen de recouvrement hors de l'enveloppe creuse.

5. Balle éclairable telle que revendiquée selon la revendication 4, dans laquelle ledit moyen de recouvrement comprend un capuchon (6) dans lequel ladite fente est localisée et ledit capuchon est fixé d'une façon en correspondance sur un logement à l'intérieur duquel ledit moyen de commande est monté, ledit logement comportant un filet de vissage externe agencé pour correspondre au filet de vissage interne du premier élément cylindrique.

6. Balle éclairable telle que revendiquée selon l'une quelconque des revendications précédentes, dans laquelle ledit moyen de commande inclut un commutateur inertiel (84) qui est normalement fermé, mais qui est agencé pour être ouvert suite à une activation par une force G prédéterminée pour permettre qu'une source d'alimentation (81) active ladite au moins une LED.

7. Balle éclairable telle que revendiquée selon la revendication 6 lorsqu'elle dépend de la revendication 5, dans laquelle ladite source d'alimentation est au moins une cellule de batterie qui est accédée en faisant tourner le moyen de recouvrement dans ladite seconde direction et en appliquant une force dirigée vers le bas pour bloquer ensemble les verrouillages interne et externe de telle sorte qu'une combinaison du capuchon et du logement puisse être dévissée depuis le verrouillage interne tandis que sans l'application d'une force dirigée vers le bas, le verrouillage interne coulisse à rotation au-dessus du verrouillage externe.
